(19) **Europäisches Patentamt / European Patent Office / Office européen des brevets**

(11) **EP 1 709 715 B1**

(12) **FASCICULE DE BREVET EUROPEEN**

(45) Date de publication et mention
de la délivrance du brevet:
**10.02.2010 Bulletin 2010/06**

(51) Int Cl.:
*H01S 3/067* (2006.01)   *G02B 6/028* (2006.01)
*G02B 6/036* (2006.01)

(21) Numéro de dépôt: **04767381.9**

(22) Date de dépôt: **16.06.2004**

(86) Numéro de dépôt international:
**PCT/FR2004/001522**

(87) Numéro de publication internationale:
**WO 2005/003829 (13.01.2005 Gazette 2005/02)**

(54) **FIBRE OPTIQUE MULTIMODE**

MULTIMODEN-LICHTFASER

MULTIMODE OPTICAL FIBRE

(84) Etats contractants désignés:
**AT BE BG CH CY CZ DE DK EE ES FI FR GB GR
HU IE IT LI LU MC NL PL PT RO SE SI SK TR**

(30) Priorité: **24.06.2003 FR 0307590**

(43) Date de publication de la demande:
**11.10.2006 Bulletin 2006/41**

(73) Titulaire: **Draka Comteq B.V.**
**1083 HJ Amsterdam (NL)**

(72) Inventeurs:
• **ANDRIEU, Xavier**
**F-91220 Bretigny-sur-Orge (FR)**
• **PROVOST, Lionel**
**F-91460 Marcoussis (FR)**
• **GASCA, Laurent**
**F-91140 Villebon-Sur-Yvette (FR)**

(74) Mandataire: **Valkonet, Rutger et al**
**Algemeen Octrooi- en Merkenbureau**
**P.O. Box 645**
**5600 AP Eindhoven (NL)**

(56) Documents cités:
**EP-A- 1 199 581    US-A- 4 265 515
US-A- 6 157 763    US-B1- 6 288 835**

• **RASTOGI V ET AL: "Large mode area single-mode fiber: a modified segmented cladding fiber" PROC. 1ST INT. CONF. ON OPTICAL COMMUNICATIONS AND NETWORKS (ICOCN), SINGAPORE 2002, 11 novembre 2002 (2002-11-11), pages 115-117, XP008029115**
• **RASTOGI V ET AL: "PROPAGATION CHARACTERISTICS OF A SEGMENTED CLADDING FIBER" OPTICS LETTERS, OPTICAL SOCIETY OF AMERICA, WASHINGTON, US, vol. 26, no. 8, 15 avril 2001 (2001-04-15), pages 491-493, XP001034429 ISSN: 0146-9592 cité dans la demande**
• **GLOGE D ET AL: "MULTIMODE THEORY OF GRADED-CORE FIBERS" BELL SYSTEM TECHNICAL JOURNAL, AMERICAN TELEPHONE AND TELEGRAPH CO. NEW YORK, US, vol. 52, no. 9, novembre 1973 (1973-11), pages 1563-1578, XP001002293 cité dans la demande**

## Description

La présente invention concerne une fibre optique multimode. De telles fibres sont en particulier utilisées pour les systèmes de transmission optique sur courte distance nécessitant une large bande passante.

Une fibre optique est classiquement composée d'un coeur optique, ayant pour fonction de transmettre l'impulsion lumineuse d'un signal optique, et d'une gaine optique, ayant pour fonction de confiner le signal optique dans le coeur. A cet effet, les indices de réfraction du coeur $n_1$ et de la gaine $n_2$ sont tels que $n_1 > n_2$.

De manière générale, on définit dans une fibre une direction axiale (Y) qui correspond à la direction de propagation du signal optique dans la fibre, une direction radiale (r) qui s'étend du centre du coeur vers la gaine de la fibre et un plan transverse (X, Y) qui correspond à une coupe de la fibre perpendiculairement à sa direction axiale.

Pour des applications courtes distances et pour les réseaux locaux, les fibres multimodes sont couramment utilisées. Un coeur multimode présente généralement un diamètre d'environ 50 $\mu$m, contre environ 6 $\mu$m pour un coeur monomode. Ainsi, pour une longueur d'onde donnée, plusieurs modes optiques se propagent simultanément le long de la fibre, véhiculant la même information.

La bande passante est directement liée au temps de groupe des modes optiques se propageant dans le coeur multimode de la fibre. Afin de garantir une large bande passante, il est nécessaire que les temps de groupe de tous les modes soient identiques, c'est-à-dire que la dispersion intermodale soit nulle ou tout au moins minimisée, pour une longueur d'onde donnée.

Or, dans une fibre classique à saut d'indice, les différents modes se propagent à des vitesses différentes le long de la fibre, ce qui provoque un étalement de l'impulsion lumineuse qui peut devénir comparable à l'espacement entre les impulsions et induire un taux d'erreur inacceptable.

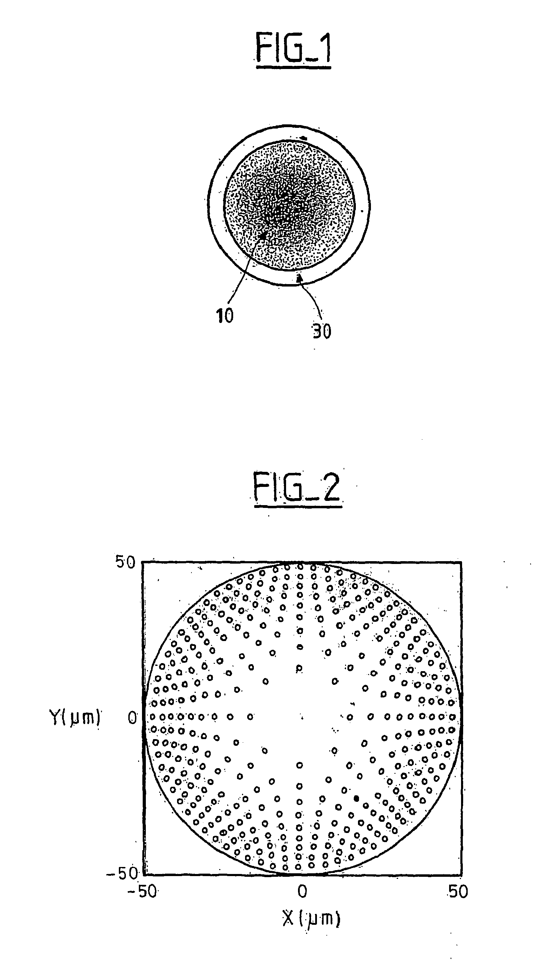

Pour diminuer la dispersion intermodale dans une fibre multimode, il a été proposé de réaliser des fibres à gradient d'indice, dont une illustration est donnée sur la figure 1. Une fibre à gradient d'indice comprend un coeur multimode 10 avec un profil d'indice radial et une gaine 30 de confinement. Une telle fibre est définie et ses caractéristiques décrites dans les publications « Multimode theory of graded-core fibres » de D.Gloge et al., Bell system Technical Journal 1973, pp 1563-1578, et « Comprehensive theory of dispersion in graded-index optical fibers » de G. Yabre, Journal of Lightwave Technology, février 2000, Vol. 18, N°2, pp166-177.

Un profil à gradient d'indice peut être défini par une relation entre la valeur n de l'indice en un point en fonction de la distance r de ce point au centre de la fibre :

$$n^2(r) = n_{max}^2 \left\{ 1 - 2\Delta(r/r_{max})^a \right\}$$

avec

$a \geq 1$ ($a \rightarrow \infty$ correspondant à un saut d'indice);
$n_{max}$, l'indice maximal du coeur multimode ;
$r_{max}$, le rayon du coeur multimode ;
$\Delta = (n_{max}^2 - n_{min}^2)/2n_{max}^2$ ; avec $n_{min}$, l'indice minimal du coeur multimode, correspondant généralement à l'indice de la gaine.

En résumé, une fibre à gradient d'indice présente un profil d'indice dans le coeur multimode qui possède une symétrie de révolution et tel que le long de toute direction radiale la valeur de l'indice décroît continûment du centre de la fibre vers sa périphérie.

Lorsqu'un signal lumineux multimode se propage dans un tel coeur à gradient d'indice, les différents modes « voient » un milieu de propagation différent, ce qui affecte différemment leur vitesse de propagation. Par un ajustement de la valeur du paramètre a, il est ainsi possible d'obtenir une vitesse de groupe quasiment égale pour tous les modes et donc une dispersion intermodale réduite.

Une telle solution présente néanmoins deux inconvénients majeurs. D'une part, le gradient d'indice est obtenu par un dopage contrôlé du coeur multimode, par exemple un dopage Germanium du coeur en silice ou en plastique, ce qui fait appel à un procédé de fabrication complexe et coûteux. D'autre part, l'évolution du dopage avec le vieillissement de la fibre peut conduire à des dégradations sensibles de la dispersion intermodale, en particulier pour les fibres optiques plastiques.

Il est également connu du document EP 1 199 581 une fibre optique présentant un coeur multimode à microstructure, dont une illustration vue en coupe transversale est donnée sur la figure 2. Cette fibre optique présente un gradient d'indice équivalent introduit dans le coeur multimode par des éléments orientés axialement dans la longueur de la fibre. Ces éléments, tels que des trous d'air, sont agencés en circonférence autour du centre du coeur multimode. Une telle fibre à microstructure est cependant complexe à fabriquer.

Il est connu de l'article RASTOGI V ET AL: "Large mode area single-mode fiber: a modified segmented cladding fiber" PROC. 1ST INT.CONF. ON OPTICAL COMMUNICATIONS AND NETWORKS (ICOCN), SINGAPORE 2002, 11 novembre 2002, pages 115-117, une fibre optique présentant un coeur multimode qui comprend deux zones comprenant chacune un matériau différent de l'autre. L'interface entre ces deux zones définit dans le plan transverse un contour qui présente une forme étoilée dans le plan transverse de la fibre. Cette structure à deux zones du coeur multimode rend la fibre équivalente à une fibre à un gradient d'indice.

Le document US 4,265,515 décrit une fibre optique à gradient d'indice effectif, comprenant une pluralité de matériaux concentriques ayant des indices de réfraction différents.

Par ailleurs, les fibres multimodes trouvent également des applications comme fibre double coeur pour amplificateur optique ou laser. Un coeur central monomode permet alors de transmettre un signal optique et un coeur multimode permet d'injecter un signal de pompe. Une région dopée, avec des éléments de terre rare par exemple, est disposée dans le coeur monomode ou en anneau dans une région entourant ledit coeur, comme cela est connu du document US 6,288,835. Le signal optique du coeur monomode est amplifié par interaction avec le signal de pompe traversant la région dopée. L'efficacité de l'amplification dépend directement du recouvrement entre le signal de pompe et le signal monomode. Ainsi, le signal de pompe multimode doit-il être amené à traverser le coeur monomode le plus souvent possible le long de la fibre dopée.

A cet effet, il a déjà été proposé, en particulier dans les documents US 5,949,941 et WO 02/03510, d'introduire des protubérances radiales sur la surface extérieure de la région dopée ou de réaliser cette surface selon une forme polygonale en coupe transverse. Ces solutions permettent un meilleur recouvrement du signal de pompe avec la région dopée.

L'objectif de la présente invention est de proposer une fibre optique multimode ayant des caractéristiques de transmission multimode qui soient équivalentes à celles d'une fibre à gradient d'indice mais sans nécessiter de réaliser un tel gradient d'indice, ladite fibre étant plus facile à fabriquer que celles connues dans l'art antérieur.

L'invention concerne plus particulièrement une fibre optique comprenant un coeur multimode comportant :

- une première zone homogène constituée d'un premier matériau ayant un premier indice de réfraction;
- une seconde zone constituée d'au moins un deuxième matériau ayant un deuxième indice de réfraction inférieur ou premier indice, cette seconde zone étant disposée en périphérie de la première zone, lesdites première et seconde zones étant configurées de sorte que l'interface entre ces zones définisse dans un plan transverse un contour délimitant la première zone qui présente une forme étoilée telle que les caractéristiques de transmission multimode de la fibre soient équivalentes à celles d'une fibre à gradient d'indice, **caractérisée en ce que** la seconde zone comprend une pluralité de matériaux ayant des indices de réfraction différents, les différents matériaux de la seconde zone sont concentriques.

Selon une caractéristique, la forme étoilée dudit contour comporte N branches et présente une symétrie angulaire d'ordre N.

Selon une caractéristique, la forme étoilée dudit contour comporte au moins 4 branches.

Selon une caractéristique, la fibre comprend en outre une gaine constitué d'un matériau de la seconde zone du coeur multimode.

Selon un mode de réalisation, le matériau de la première zone du coeur multimode contient du verre.

Selon un autre mode de réalisation, le matériau de la première zone du coeur multimode contient du plastique.

Selon un mode de réalisation, le matériau de la seconde zone du coeur multimode contient du plastique.

Selon un autre mode de réalisation, le matériau de la seconde zone du coeur multimode contient du verre.

Selon une caractéristique, le verre contient de la silice.

Selon un mode de réalisation, le matériau de la première et/ou seconde zone du coeur multimode contient un élément dopant.

Selon une caractéristique, la fibre comprend en outre un coeur monomode et la première zone est placée en périphérie de ce coeur monomode.

Selon une caractéristique, le coeur monomode comporte un dopant de terre rare.

Selon une caractéristique, le coeur monomode est entouré d'un anneau contenant un dopant de terre rare.

L'invention concerne aussi un amplificateur optique ou un laser comprenant une fibre optique selon l'invention.

L'invention concerne également un réseau optique local comprenant au moins une fibre optique selon l'invention.

Les particularités et avantages de l'invention seront mieux compris à la lecture de la description qui suit, donnée à titre d'exemple illustratif et non limitatif, et faite en référence aux figures annexées qui représentent :

- la figure 1, déjà décrite, une vue schématique en coupe transversale d'une fibre optique à gradient d'indice selon l'art antérieur ;
- la figure 2, déjà décrite, une vue schématique en coupe transversale d'une fibre à microstructure présentant un gradient d'indice équivalent selon l'art antérieur ;
- la figure 3, une vue schématique en coupe transversale d'une fibre selon l'art antérieur ;
- la figure 4, un graphe de l'indice de réfraction équivalent de la fibre de la figure 3 ;
- la figure 5, une vue schématique en coupe transversale d'une fibre selon un deuxième exemple illustratif ;
- la figure 6, un graphe de l'indice de réfraction équivalent de la fibre de la figure 5 ;
- la figure 7, une vue schématique en coupe transversale d'une fibre selon le deuxième exemple dans une application à une fibre amplificatrice ;
- la figure 8, une vue schématique en coupe transversale d'une fibre selon un mode de réalisation de l'invention ;
- la figure 9, un graphe de l'indice de réfraction équivalent de la fibre de la figure 8 ;
- la figure 10, un graphe de l'indice de réfraction dans le plan transverse de la fibre de la figure 8.

Selon l'invention, une fibre optique multimode équivalente à une fibre présentant un profil d'indice à un gradient d'indice est réalisée, Une telle fibre peut ainsi trouver des applications à la transmission haut débit sur courte distance avec une bande passante améliorée, ou des applications à l'amplification en ligne sur fibre double coeur avec un taux de recouvrement amélioré.

Le coeur multimode de la fibre selon l'invention comprend deux zones comprenant chacune un matériau différent de l'autre. L'interface entre ces deux zones définit dans le plan transverse un contour qui présente une forme étoilée dans le plan transverse de la fibre. Cette structure à deux zones du coeur multimode rend la fibre équivalente à une fibre à un gradient d'indice.

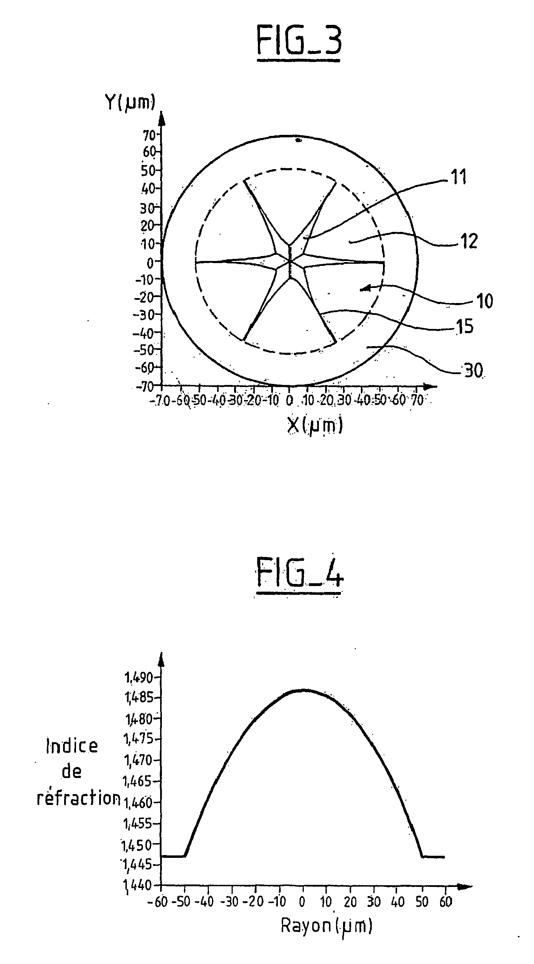

Une fibre selon l'art antérieur est décrit en référence à la figure 3 qui représente une vue schématique en coupe transversale de la fibre.

Le coeur multimode 10 (délimité par les pointillés) présente une première zone 11 comprenant un premier matériau ayant un indice de réfraction $n_1$ et une seconde zone 12 comprenant un deuxième matériau ayant un indice de réfraction $n_2 < n_1$. Un comportement équivalent à une fibre à gradient d'indice est obtenu par une forme de l'interface 15 entre lesdites zones 11, 12 qui est telle que le contour que définit cette interface dans un plan transverse présente une forme étoilée. L'interface 15 entre les matériaux desdites zones 11, 12 réalise un saut d'indice.

Le gradient d'indice équivalent obtenu est reproduit sur le graphe de la figure 4.

Les matériaux des ces deux zones peuvent être de natures différentes ou présenter un dopage approprié qui induit le saut d'indice à i'interface 15. Les matériaux des zones 11 et 12 sont cependant homogènes, le dopage le cas échéant étant uniforme dans ledit matériau. La fabrication d'une telle fibre est donc simplifiée par rapport au contrôle nécessaire lorsqu'un gradient d'indice doit être introduit par dopage directement dans un unique matériau.

Les matériaux des zones 11 et 12 du coeur multimode peuvent être en verre et/ou en plastique, éventuellement dopés.

Selon un mode de réalisation, le matériau de la première zone 11 peut être un plastique, tel que du Poly Méthyle Méthacrylate (connu sous le terme de Plexiglas®) et le matériau de la seconde zone 12 peut être un plastique, par exemple du Poly Méthyle Méthacrylate dopé avec un composé Fluoré. L'interface 15 à contour en étoile peut être obtenue par extrusion des polymères.

Selon un autre mode de réalisation, le matériau de la première zone 11 peut être un verre, par exemple de la silice, éventuellement dopé avec du germanium, de l'aluminium, du phosphore ou du lanthane qui augmente l'indice de réfraction. Le matériau de la seconde zone 12 peut être un plastique, tel que du Téflon® amorphe par exemple, déposé sur une préforme en verre de la première zone 11 pendant ou après l'étirage de la fibre.

Selon un autre mode de réalisation, les matériaux des première 11 et seconde 12 zones peuvent également être en verre, par exemple en silice, différemment dopés pour garantir le saut d'indice à l'interface 15. La première zone 11 peut être de la silice dopée avec du germanium par exemple ou tout autre dopant élevant l'indice de réfraction précédemment cité ; et la seconde zone 12 peut être de la silice dopée avec du fluor ou du bore pour diminuer l'indice de réfraction ou comprendre un verre silicate ou un verre fluoré. La forme étoilée peut être obtenue par montage verrier. La différence de viscosité entre les zones 11, 12 permet de créer une déformation lors de l'étirage sur la préforme et de créer la forme étoilée de l'interface 15.

Sur la figure 3, le contour de l'interface 15 de forme étoilée comporte 6 branches. Le gradient d'indice équivalent est induit par la valeur des indices $n_1$ et $n_2$ respectifs des matériaux de la première et seconde zone et par la longueur et l'épaisseur des branches de la forme étoilée de l'interface.

La méthode de calcul de l'indice équivalent est principalement basée sur les publications de Rastogi et al., « Propagation characteristics of a segmented cladding fiber », Optics letters, Vol.26, N°8, pp.491-493, et de Chiang, « Radial effective-index method for the analysis of optical fibers », Applied Optics, Vol.26, N°15, pp. 2969-2973.

Cette méthode permet de définir les caractéristiques des modes, à savoir le champ électrique E et l'indice effectif $n_{eff}$, dans un profil d'indice périodique azimutal de période angulaire $\theta_m = 2\pi/N$, avec N le nombre de branches. En se basant sur l'hypothèse que le champ électrique d'un mode $E(r,\theta)$ peut être décomposé en une composante radiale $E_r$ et une composante azimutale $E_{r\theta}$, tel que $E(r,\theta) = E_r(r)$. $E_{r\theta}(r,\theta)$, l'obtention de la constante de propagation du mode est basée sur un calcul d'un profil d'indice équivalent $n_{eq}$ à symétrie circulaire. Ce profil d'indice $n_{eq}$ est obtenu par une distribution azimutale des indices de réfraction sur un rayon donné.

Ainsi, en choisissant de manière appropriée la distribution azimutale des indices de réfraction, c'est-à-dire le nombre et l'épaisseur des branches ainsi que la valeur des indices de réfraction des matériaux utilisés, on peut réaliser l'équivalent d'un gradient d'indice pour les modes optiques se propageant dans un tel milieu.

Sur l'exemple de la figure 3, le diamètre du coeur multimode est de $50\mu m$, la différence d'indice $\Delta n$ de $4.10^{-2}$ et la valeur de a=2. On obtient alors, comme reporté sur la figure 4, un profil d'indice en gradient depuis le centre du coeur multimode jusqu'à la gaine 30 de la fibre.

Dans cet exemple, comme illustré sur la figure 3, la gaine 30 de la fibre est composée du même matériau que celui utilisé pour la seconde zone 12 du coeur multimode 10. Cela simplifie évidement la fabrication de la fibre. La gaine 30 présente dans cet exemple une épaisseur de 20μm.

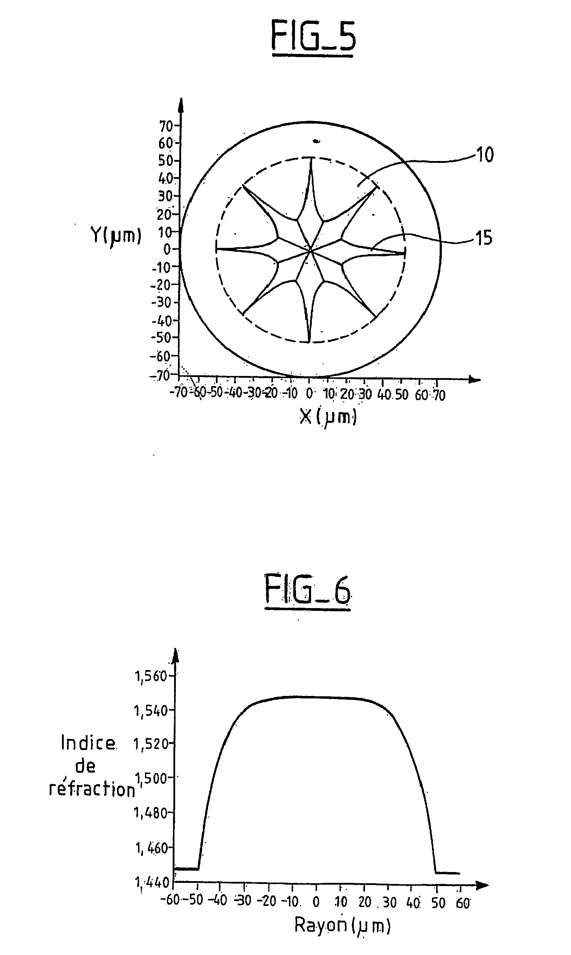

Dans l'exemple de la figure 5, l'interface 15 de forme étoilée comporte 8 branches. Le diamètre du coeur multimode 10 est de 50μm, la différence d'indice Δn de $1.10^{-1}$ et la valeur de a=5. On obtient alors, comme reporté sur la figure 6, un profil d'indice en gradient depuis le centre du coeur multimode jusqu'à la gaine de la fibre.

Selon les modes de réalisation la forme étoilée de l'interface 15 présente un nombre de branche N appropriée, au moins 4, de préférence uniformément distribuée azimutalement, c'est-à-dire que les branches sont réparties de manière à ce que l'angle formé entre deux branches consécutives soit identique quelle que soit la branche considérée. Le contour de l'interface 15 présente donc une symétrie angulaire d'ordre N.

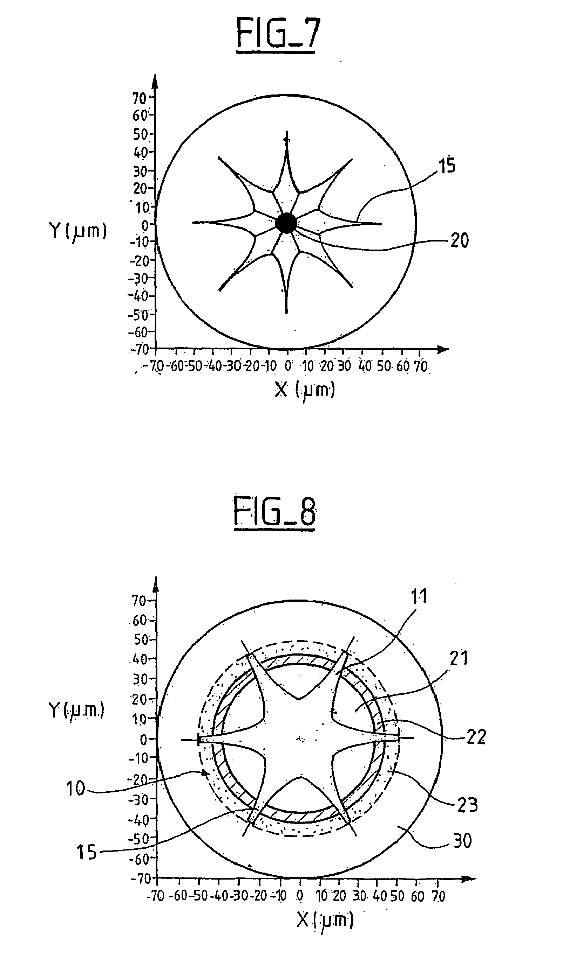

Dans l'exemple de la figure 7, l'interface 15 de forme étoilée comporte 8 branches et le coeur multimode correspond à celui de la figure 5. La fibre comporte en outre un coeur monomode central 20 apte à transmettre un signal optique monomode. Ce coeur monomode peut inclure un milieu amplificateur, en étant par exemple dopé avec un élément de terre rare, tel que de l'erbium (Er). Le coeur monomode peut également être entouré d'un anneau contenant le milieu amplificateur, comme cela est connu du document US 6,288,835 précédemment cité.

Le coeur multimode est alors utilisé pour transmettre une onde de pompe sur une certaine distance de fibre. La structure en gradient d'indice du coeur multimode permet un meilleur recouvrement de l'onde de pompe avec le milieu amplificateur en donnant plus de puissance aux modes de propagation d'ordre supérieur, les modes d'ordres inférieurs étant susceptibles d'être plus fortement atténués le long de la fibre par un phénomène connu de couplage de mode. En conséquence, le meilleur recouvrement de l'onde multimode de pompe avec le milieu amplificateur et le coeur monomode apporte un meilleur rendement d'amplification du signal monomode.

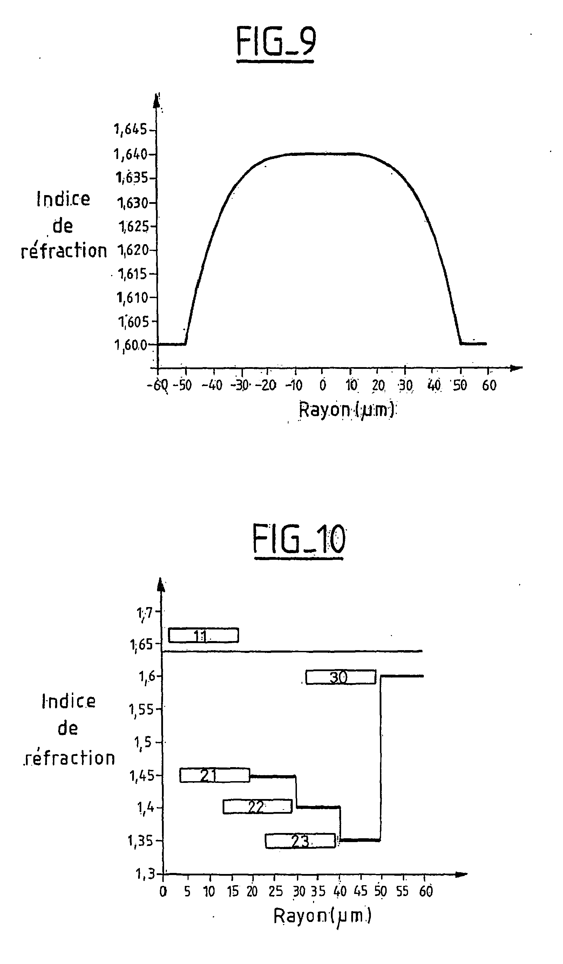

Dans la fibre selon un mode de réalisation de l'invention de la figure 8, l'interface 15 de forme étoilée comporte 6 branches. Le diamètre du coeur multimode 10 est de 50μm, la différence d'indice Δn de $4.10^{-2}$ et la valeur de a=4. On obtient alors, comme reporté sur la figure 9, un profil d'indice en gradient depuis le centre du coeur multimode jusqu'à la gaine 30 de la fibre.

Dans cet exemple, la seconde zone 12 du coeur multimode est composée d'une pluralité de matériaux concentriques 21 (blanc), 22 (rayé), 23 (points) ayant des indices de réfraction différents décroissants reportés sur la figure 10.

En revenant à la méthode de calcul de l'indice équivalent décrite précédemment, on obtient alors une distribution azimutale des indices de réfraction pour un rayon donné modifiée, par rapport à l'exemple de la figure 3, par la présence d'indices de réfraction différents dans la seconde zone 12. Ce mode de réalisation permet ainsi de réaliser une première zone 11 de forme étoilée avec des branches plus épaisses que dans l'exemple de la figure 3, ce qui est plus facile à fabriquer.

Une telle fibre peut être composée de verre faiblement dopé pour le matériau de la première zone 11 et de trois polymères extrudés pour les matériaux 21, 22, 23 de la seconde zone 12. La gaine 13 de la fibre peut être en verre. Les matériaux plastiques de la zone 12 peuvent être du Poly Méthyle Méthacrylate, du Poly Carbonate, du Téflon® AF, une résine acrylate, éventuellement dopée au fluor pour abaisser son indice de réfraction, du Cytop™ commercialisé par exemple par la société Asahi Glass.

Un homme du métier pourra déterminer un profil d'indice équivalent pour le coeur multimode d'une fibre optique, qui soit approprié à l'application souhaitée, en choisissant les indices de réfraction des matériaux des zones 11, 12 et la forme de l'interface 15, c'est-à-dire le nombre et l'épaisseur des branches à conformer.

**Revendications**

1. Fibre optique comprenant un coeur multimode (10) comportant :

   - une première zone (11) homogène constituée d'un premier matériau ayant un premier indice de réfraction ($n_1$);
   - une seconde zone (12) constituée d'au moins un deuxième matériau ayant un deuxième indice de réfraction ($n_2$) inférieur au premier indice ($n_1$), cette seconde zone (12) étant disposée en périphérie de la première zone (11), lesdites première et seconde zones étant configurées de sorte que l'interface entre ces zones définisse dans un plan transverse un contour délimitant la première zone (11) qui présente une forme étoilée telle que les caractéristiques de transmission multimode de la fibre soient équivalentes à celles d'une fibre à gradient d'indice, **caractérisée en ce que** la seconde zone (12) comprend une pluralité de matériaux (21, 22, 23) ayant des indices de réfraction différents, et que les différents matériaux de la seconde zone (12) sont concentriques.

2. Fibre optique selon la revendication 1, **caractérisée en ce que** la forme étoilée dudit contour comporte N branches et présente une symétrie angulaire d'ordre N.

3. Fibre optique selon l'une des revendications 1 à 2, **caractérisée en ce que** la forme étoilée dudit contour comporte au moins 4 branches.

4. Fibre optique selon l'une quelconque des revendications précédentes, **caractérisée en ce qu'**elle comprend en outre une gaine (30) constitué d'un matériau de la seconde zone (12) du coeur multimode.

5. Fibre optique selon l'une quelconque des revendications 1 à 4, **caractérisée en ce que** le matériau de la première zone (11) du coeur multimode contient du verre.

6. Fibre optique selon l'une quelconque des revendications 1 à 4, **caractérisée en ce que** le matériau de la première zone (11) du coeur multimode contient du plastique.

7. Fibre optique selon l'une quelconque des revendications précédentes, **caractérisée en ce que** le matériau de la seconde zone (12) du coeur multimode contient du plastique.

8. Fibre optique selon l'une quelconque des revendications 1 à 5, **caractérisée en ce que** le matériau de la seconde zone (12) du coeur multimode contient du verre.

9. Fibre optique selon la revendication 5 ou 8, **caractérisé en ce que** le verre contient de la silice.

10. Fibre optique selon l'une quelconque des revendications précédentes, **caractérisée en ce que** le matériau de la première et/ou seconde zone (11, 12) du coeur multimode contient un élément dopant.

11. Fibre optique selon l'une quelconque des revendications précédentes, **caractérisée en ce qu'**elle comprend en outre un coeur monomode (20) et **en ce que** ladite première zone (11) est placée en périphérie de ce coeur monomode (20).

12. Fibre optique selon la revendication 11, **caractérisée en ce que** le coeur monomode comporte un dopant de terre rare.

13. Fibre optique selon la revendication 11, **caractérisée en ce que** le coeur monomode est entouré d'un anneau contenant un dopant de terre rare.

14. Amplificateur optique comprenant une fibre optique selon l'une des revendications 11 à 13.

15. Laser comprenant une portion de fibre optique selon l'une des revendications 11 à 13.

16. Réseau optique local comprenant au moins une fibre optique selon l'une des revendications 1 à 10.

**Claims**

1. Optical fibre having a multimode core (10) comprising:

   - a first zone (11), which is homogeneous, made of a first material, which has a first refractive index ($n_1$);
   - a second zone (12) made of at least one second material, which has a second refractive index ($n_2$), which is less than the first index ($n_1$), that second zone (12) being peripherally arranged with respect to the first zone (11), said first and second zones being configured so that the interface between those zones defines, in a transverse plane, a contour delimiting the first zone (11) which has a star shape such that the multimode transmission characteristics of the fibre are equivalent to those of a graded-index fibre, **characterised in that** the second zone (12) comprises a plurality of materials (21, 22, 23) having different refractive indices, and **in that** the different materials of the second zone (12) are concentric.

2. Optical fibre according to claim 1, **characterised in that** the star shape of said contour has N arms and has rotational symmetry of order N.

3. Optical fibre according to one of claims 1 to 2, **characterised in that** the star shape of said contour has at least 4 arms.

4. Optical fibre according to any one of the preceding claims, **characterised in that** it comprises, in addition, a cladding (30) made of a material of the second zone (12) of the multimode core.

5. Optical fibre according to any one of claims 1 to 4, **characterised in that** the material of the first zone (11) of the multimode core comprises glass.

6. Optical fibre according to any one of claims 1 to 4, **characterised in that** the material of the first zone (11) of the multimode core comprises plastics material.

7. Optical fibre according to any one of the preceding claims, **characterised in that** the material of the second zone (12) of the multimode core comprises plastics material.

8. Optical fibre according to any one of claims 1 to 5, **characterised in that** the material of the second zone (12) of the multimode core comprises glass.

9. Optical fibre according to claim 5 or 8, **characterised in that** the glass comprises silica.

**10.** Optical fibre according to any one of the preceding claims, **characterised in that** the material of the first and/or second zone (11, 12) of the multimode core comprises a dopant element.

**11.** Optical fibre according to any one of the preceding claims, **characterised in that** it comprises, in addition, a single-mode core (20), and **in that** said first zone (11) is located peripherally with respect to that single-mode core (20).

**12.** Optical fibre according to claim 11, **characterised in that** the single-mode core comprises a rare-earth dopant.

**13.** Optical fibre according to claim 11, **characterised in that** the single-mode core is surrounded by a ring comprising a rare-earth dopant.

**14.** Optical amplifier which includes an optical fibre according to one of claims 11 to 13.

**15.** Laser which includes a portion of optical fibre according to one of claims 11 to 13.

**16.** Local optical network which includes at least one optical fibre according to one of claims 1 to 10.

**Patentansprüche**

**1.** Optische Faser umfassend einen Multimodekern (10), welcher umfasst:

- eine erste homogene Zone (11), welche von einem ersten Material mit einem ersten Brechungsindex ($n_1$) gebildet ist,
- eine zweite Zone (12), welche durch mindestens ein zweites Material mit einem zweiten Brechungsindex ($n_2$) kleiner als dem ersten Index ($n_1$) gebildet ist, wobei die zweite Zone (12) an der Peripherie der ersten Zone (11) angeordnet ist, wobei die erste und zweite Zone derart ausgestaltet sind, dass die Grenzfläche zwischen diesen Zonen in einer senkrechten Ebene eine Kontur definiert, welche die erste Zone (11) begrenzt, welche eine sternartige Form derart aufweist, dass die Eigenschaften der Multimodeübertragung der Faser gleich denjenigen einer Faser mit einem Indexgradienten sind, **dadurch gekennzeichnet, dass** die zweite Zone (12) eine Vielzahl von Materialien (21, 22, 23) mit unterschiedlichen Brechungsindices umfasst und dass die verschiedenen Materialien der zweiten Zone (12) konzentrisch sind.

**2.** Optische Faser gemäß Anspruch 1, **dadurch gekennzeichnet, dass** die sternartige Form der Kontur N Zweige umfasst und eine Drehsymmetrie der Ordnung N aufweist.

**3.** Optische Faser gemäß einem der Ansprüche 1-2, **dadurch gekennzeichnet, dass** die sternartige Form der Kontur mindestens vier Zweige umfasst.

**4.** Optische Faser gemäß einem der vorhergehenden Ansprüche, **dadurch gekennzeichnet, dass** sie zudem eine Hülle (30) umfasst, welche durch ein Material der zweiten Zone (12) des Multimodekerns gebildet ist.

**5.** Optische Faser gemäß einem der Ansprüche 1-4, **dadurch gekennzeichnet, dass** das Material der ersten Zone (11) des Multimodekerns Glas enthält.

**6.** Optische Faser gemäß einem der Ansprüche 1-4, **dadurch gekennzeichnet, dass** das Material der ersten Zone (11) des Multimodekerns Kunststoff enthält.

**7.** Optische Faser gemäß einem der vorhergehenden Ansprüche, **dadurch gekennzeichnet, dass** das Material der zweiten Zone (12) des Multimodekerns Kunststoff enthält.

**8.** Optische Faser gemäß einem der Ansprüche 1-5, **dadurch gekennzeichnet, dass** das Material der zweiten Zone (12) des Multimodekerns Glas enthält.

**9.** Optische Faser gemäß Anspruch 5 oder 8, **dadurch gekennzeichnet, dass** das Glas Siliziumdioxid enthält.

**10.** Optische Faser gemäß einem der vorhergehenden Ansprüche, **dadurch gekennzeichnet, dass** das Material der ersten und/oder zweiten Zone (11, 12) des Multimodekerns ein Dotierelement enthält.

**11.** Optische Faser gemäß einem der vorhergehenden Ansprüche, **dadurch gekennzeichnet, dass** sie zudem einen Monomodekern (20) umfasst und dass die erste Zone (11) an der Peripherie des Monomodekerns (20) angeordnet ist.

**12.** Optische Faser gemäß Anspruch 11, **dadurch gekennzeichnet, dass** der Monomodekern einen seltenen Erd-Dotierstoff umfasst.

**13.** Optische Faser gemäß Anspruch 11, **dadurch gekennzeichnet, dass** der Monomodekern von einem Ring umgeben ist, welcher einen seltenen Erd-Dotierstoff enthält.

**14.** Optischer Verstärker umfassend eine optische Faser gemäß einem der Ansprüche 11-13.

**15.** Laser umfassend einen Abschnitt einer optischen Faser gemäß einem der Ansprüche 11-13.

**16.** Lokales optisches Netz umfassend mindestens eine optische Faser gemäß einem der Ansprüche 1-10.

## FIG_1

10    30

## FIG_2

## FIG_3

## FIG_4

## FIG_5

## FIG_6

## FIG_7

## FIG_8

## FIG_9

Indice de réfraction

1,645
1,640
1,635
1,630
1,625
1,620
1,615
1,610
1,605
1,600

-60 -50 -40 -30 -20 -10 0 10 20 30 40 50 60

Rayon (μm)

## FIG_10

Indice de réfraction

1,7
1,65
1,6
1,55
1,5
1,45
1,4
1,35
1,3

0 5 10 15 20 25 30 35 40 45 50 55 60

Rayon(μm)

11

30

21

22

23

13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1199581 A
- US 4265515 A
- US 6288835 B
- US 5949941 A
- WO 0203510 A

**Littérature non-brevet citée dans la description**

- **de D.Gloge et al.** Multimode theory of graded-core fibres. *Bell system Technical Journal,* 1973, 1563-1578
- **de G. Yabre.** Comprehensive theory of dispersion in graded-index optical fibers. *Journal of Lightwave Technology,* Février 2000, vol. 18 (2), 166-177
- **RASTOGI V et al.** Large mode area single-mode fiber: a modified segmented cladding fiber. *PROC. 1ST INT.CONF. ON OPTICAL COMMUNICATIONS AND NETWORKS,* 11 Novembre 2002, 115-117
- **de Rastogi et al.** Propagation characteristics of a segmented cladding fiber. *Optics letters,* vol. 26 (8), 491-493
- **de Chiang.** Radial effective-index method for the analysis of optical fibers. *Applied Optics,* vol. 26 (15), 2969-2973